# FASCICULE DE BREVET EUROPEEN

(11) **EP 4 119 728 B1**
(45) Date de publication et mention de la délivrance du brevet: **06.03.2024**
(21) Numéro de dépôt: 22184769.2
(22) Date de dépôt: 13.07.2022
(51) Int. Cl.: E01H 1/04, E01H 1/08

(54) **BALAYEUSE INDUSTRIELLE POURVUE D'UN DISPOSITIF DE DECOLMATAGE PERFECTIONNE DE SON FILTRE A AIR**
INDUSTRIELLE KEHRMASCHINE, DIE MIT EINER PERFEKTIONIERTEN REINIGUNGSVORRICHTUNG FÜR IHREN LUFTFILTER VERSEHEN IST
INDUSTRIAL SWEEPING MACHINE EQUIPPED WITH A DEVICE FOR IMPROVED CLEANING OF ITS AIR FILTER

(30) Priorité: 16.07.2021 FR 2107697
(43) Date de publication de la demande: 18.01.2023
(73) Titulaire: Etablissements Emily, 29800 Tréflévénez (FR)
(72) Inventeur: GUENGANT, Michel, 29440 Plougar (FR); MORVAN, Michel, 29800 Landerneau (FR); MIOSSEC, Arnaud, 29440 Plouzévédé (FR)
(74) Mandataire: Cabinet Le Guen Maillet

(56) Documents cités:
- FR-A1- 3 087 798
- US-A- 5 254 146
- US-A- 5 987 699

## Description

La présente invention concerne une balayeuse industrielle destinée à nettoyer les sols sur de relativement grandes étendues.

Dans la demande de brevet publiée sous le n° FR3087798, est présentée une balayeuse industrielle au fonctionnement autonome, c'est-à-dire qui est conçue pour fonctionner par simple roulage sur un sol à nettoyer, en la poussant ou en la tractant. La balayeuse industrielle selon FR3087798 comprend les caractéristiques du préambule de la revendication 1, en détail:
une brosse à axe horizontal en considérant la position d'utilisation de la balayeuse sur un sol horizontal,
un bac de collecte destiné à collecter les poussières balayées par la brosse pendant le fonctionnement de la balayeuse,
une turbine d'aspiration située en aval du bac de collecte pour favoriser, par aspiration, l'introduction des saletés dans ledit bac de collecte,
au moins une roue destinée à prendre appui sur le sol à nettoyer pour entraîner pendant le déplacement de la balayeuse sur le sol ladite brosse et ladite turbine,
un cadre porte-filtre interposé entre le bac de collecte et ladite turbine et destiné à réceptionner un filtre à air, un dispositif de décolmatage conçu pour agir sur le cadre porte-filtre, comprenant, au moins un poussoir porté par le cadre porte-filtre, au moins un percuteur relié mécaniquement au bac de collecte et agencé pour frapper de manière séquentielle ledit poussoir, pendant le mouvement d'ouverture du bac de collecte.

Ainsi, quand un filtre à air est monté dans le porte-filtre, il est nettoyé par percussion à chaque vidange du bac de collecte de la balayeuse.

Bien que le fonctionnement du dispositif de décolmatage soit correct, il faut cependant noter les inconvénients suivants :
Pendant le mouvement d'ouverture du bac de collecte qui provoque le frappement répété du percuteur sur le filtre à air, de la poussière se repend autour de la balayeuse. Cette poussière peut aussi pénétrer dans la chambre d'aspiration de la turbine. De la poussière se dépose également sur le joint d'étanchéité entre le filtre à air et le cadre porte-filtre. Le dispositif de décolmatage est assez compliqué à fabriquer, notamment par la présence, d'une crémaillère, d'un pignon.

Partant de ce constat, le demandeur a cherché à concevoir une balayeuse industrielle incluant un dispositif de décolmatage et qui puisse être plus simple et plus efficace. A cet effet, est proposée une balayeuse industrielle conçue pour fonctionner par roulage sur un sol à nettoyer, en la poussant ou en la tractant, comprenant :
une brosse à axe horizontal en considérant la position d'utilisation de la balayeuse industrielle sur un sol horizontal,
un bac de collecte destiné à collecter les saletés balayées par la brosse pendant le fonctionnement de la balayeuse industrielle, le bac de collecte étant monté à pivotement autour d'une articulation décalée latéralement du centre de gravité du bac de collecte entre une position de fermeture et de travail de la balayeuse industrielle et une position maximum d'ouverture permettant la vidange dudit bac de collecte,
une turbine d'aspiration située en aval du bac de collecte pour favoriser, par aspiration, l'introduction des poussières dans ledit bac de collecte lorsqu'il est disposé dans sa position de fermeture,
deux roues destinées à prendre appui sur le sol à nettoyer,
un filtre à air fixé sur le bac de collecte, et
un mécanisme de décolmatage du filtre à air comprenant une butée conçue pour bloquer la course du bac de collecte dans sa position maximum d'ouverture, la butée provoquant un choc à la fin du mouvement d'ouverture du bac de collecte, où le passage de la position de fermeture à la position maximum d'ouverture s'effectue sous l'effet de la gravité.

Ainsi, quand le bac de collecte est largué depuis sa position de fermeture, la butée stop brutalement le mouvement d'ouverture du bac de collecte dans sa fin de course. Le choc ainsi généré dans le bac de collecte décolmate le filtre à air fixé sur le bac de collecte. Les poussières éjectées du filtre à air demeurent confinées dans le bac de collecte. La scène autour de la machine demeure exempte de poussières. Le filtre à air est nettoyé à chaque vidange du bac de collecte de la balayeuse industrielle. Selon une caractéristique additionnelle de l'invention, le bac de collecte comprend un caisson de section transversale en forme de L, pourvu d'une ouverture d'admission des saletés et des poussières, d'une ouverture de sortie de l'air, le filtre à air étant fixé autour de l'ouverture de sortie de l'air et où en position d'ouverture, la vidange du bac de collecte s'effectue à travers l'ouverture d'admission.

Le filtre à air est positionné autour de l'ouverture de sortie d'air.

Selon une caractéristique additionnelle de l'invention, deux glissières de guidage du filtre à air sont disposées à l'opposé l'une de l'autre et en étant fixées sur deux bords transversaux délimitant l'ouverture de sortie de l'air, le filtre à air présentant une géométrie en forme de parallélépipède ou de prisme, le filtre à air étant inséré entre les deux glissières.

Cette construction permet l'insertion du filtre à air dans le bac de collecte lorsqu'il est disposé dans sa position d'ouverture, à la manière d'un tiroir.

Selon une caractéristique additionnelle de l'invention, le filtre à air est délimité par deux faces principales ouvertes et découvrant l'élément filtrant, l'une inférieure, pour l'admission d'air et l'autre supérieure, pour la sortie de l'air filtré, deux joints étant fixés sur le périmètre des deux faces principales dudit filtre à air, le filtre à air étant fixé autour de l'ouverture de sortie de l'air, par l'intermédiaire d'un applicateur comprenant un cadre ou une couronne monté(e) de manière articulée et susceptible de prendre appui sur le joint périmétrique de la face supérieure du filtre à air.

L'applicateur peut ainsi maintenir le filtre à air appliqué sur l'ouverture de sortie de l'air du caisson.

Selon une caractéristique additionnelle de l'invention, la butée comprend un coulisseau monté de manière articulée par une extrémité sur le bac de collecte, par l'intermédiaire d'un axe commun avec le bac de collecte, le coulisseau étant traversé d'une rainure pouvant coulisser sur un second axe solidaire d'un châssis constitutif de la balayeuse, la rainure comprenant une partie longue et dont l'extrémité libre définit en coopération avec le second axe, la butée déterminant la position d'ouverture maximum du bac de collecte.

Le choc brutal ainsi généré dans le bac de collecte par la butée du coulisseau décolmate le filtre à air fixé sur le bac de collecte. Les poussières éjectées du filtre à air par le décolmatage demeurent dans le bac de collecte.

Selon une caractéristique additionnelle de l'invention, la partie longue de la rainure est prolongée dans la partie basse de celle-ci, par une partie courte qui s'étend vers le haut, l'extrémité de la partie courte de ladite rainure définissant avec son engagement sur le second axe, tel un verrou, la position de fermeture du caisson.

Le verrou constitutif du coulisseau peut ainsi bloquer en position le bac de collecte dans sa position de fermeture.

En variante de réalisation, le mécanisme de décolmatage comprend un câble dont une extrémité est fixée sur un châssis constitutif de la balayeuse industrielle et dont l'autre extrémité est fixée sur un axe commun avec le bac de collecte, le câble tendu formant une butée au mouvement d'ouverture du bac de collecte et en déterminant ainsi sa position d'ouverture maximum, et la balayeuse industrielle est équipée d'un verrou de blocage automatique du bac de collecte lorsqu'il est ramené vers sa position de fermeture, le verrou incluant un pêne escamotable.

Le câble forme quand il se tend, une butée au mouvement d'ouverture du bac de collecte et détermine ainsi la position d'ouverture maximum du bac de collecte. Le choc provoqué par l'arrêt brusque du mouvement d'ouverture du bac de collecte décolmate le filtre à air. Les poussières éjectées du filtre à air sont collectées dans le bac de collecte.

En variante de réalisation, le mécanisme de décolmatage comprend une butée radiale portée par un arbre constitutif de l'articulation, une seconde butée fixe portée par un châssis constitutif de la balayeuse industrielle et coopérant avec la butée radiale, pour limiter la rotation du bac de collecte autour de l'articulation à sa position d'ouverture maximale.

La mise en contact des deux butées forme un arrêt au mouvement d'ouverture du bac de collecte en déterminant ainsi la position d'ouverture maximum du bac de collecte. Le choc provoqué par l'arrêt brusque du mouvement d'ouverture du bac de collecte décolmate le filtre à air. Les poussières éjectées du filtre à air sont collectées dans le bac de collecte.

Selon une caractéristique additionnelle de l'invention, la balayeuse industrielle comprend deux pompes hydrauliques respectivement entraînées à rotation par les deux roues principales de la balayeuse industrielle, trois moteurs hydrauliques raccordés en série et alimentés par les deux pompes hydrauliques pour respectivement entraîner à rotation, la brosse à axe horizontal, une brosse latérale et la turbine d'aspiration.

La balayeuse industrielle peut ainsi fonctionner de manière autonome en étant simplement poussée ou tractée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 représente une vue avant en perspective d'une balayeuse industrielle selon l'invention,
Fig. 2 représente une vue avant en perspective sous un autre angle d'une balayeuse industrielle selon l'invention,
Fig. 3 représente une vue arrière en perspective d'une balayeuse industrielle selon l'invention,
Fig. 4 représente une vue latérale en coupe d'une balayeuse industrielle dont le bac de collecte dont elle est pourvue est disposé dans une position de fermeture selon l'invention,
Fig. 5 représente un schéma d'un circuit hydraulique d'une balayeuse industrielle selon l'invention,
Fig. 6 représente une vue de dessus en coupe d'une balayeuse industrielle selon l'invention,
Fig. 7 représente une vue latérale en coupe d'une balayeuse industrielle dont le bac de collecte dont elle est pourvue est disposé dans une position de dégagement, un filtre à air étant plaqué contre le bac de collecte par l'intermédiaire d'un applicateur disposé dans une position d'engagement selon l'invention,
Fig. 8 représente une vue latérale en coupe d'une balayeuse industrielle dont le bac de collecte dont elle est pourvue est disposé dans une position de dégagement, un filtre à air étant dégagé du bac de collecte par l'applicateur disposé dans une position de dégagement selon l'invention,
Fig. 9 représente une vue avant en perspective d'une balayeuse industrielle et de son filtre à air extrait de son bac de collecte selon l'invention,
Fig. 10 présente une variante de réalisation d'un filtre à air disposé sur un bac de collecte constitutif d'une balayeuse industrielle selon l'invention,
Fig. 11 représente une vue latérale en coupe d'une balayeuse industrielle dont le bac de collecte dont elle est pourvue est disposé dans une position de fermeture selon l'invention,
Fig. 12 représente une vue latérale en coupe d'une balayeuse industrielle dont le bac de collecte dont elle est pourvue est déverrouillé selon l'invention,
Fig. 13 représente une vue latérale en coupe d'une balayeuse industrielle dont le bac de collecte dont elle est pourvue est basculé dans une position de dégagement selon l'invention et,
Fig. 14 représente une vue latérale en coupe d'une balayeuse industrielle dont le bac de collecte dont elle est pourvue est en cours de remontée vers une position de fermeture selon l'invention.

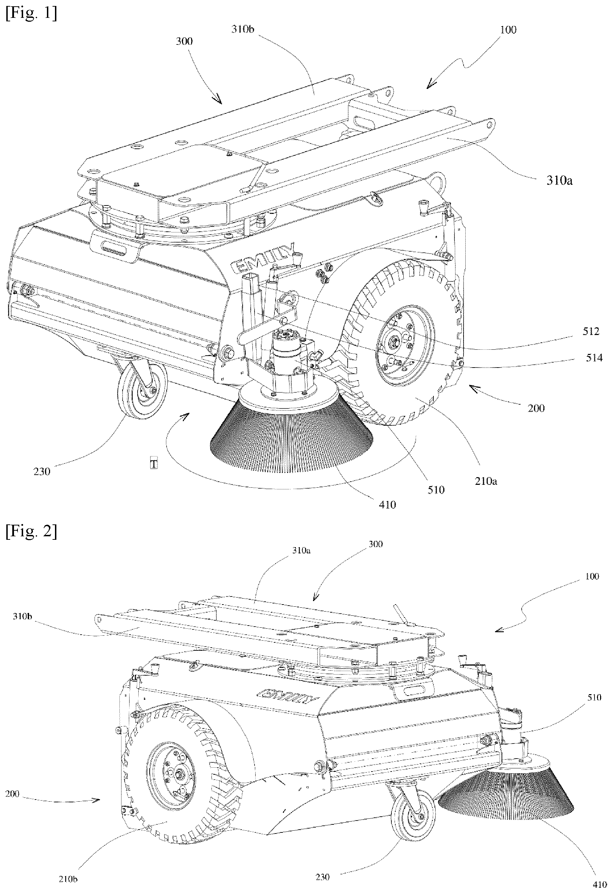

La balayeuse industrielle 100 présentée sur les Figs. 1, 2 et 3 est destinée à nettoyer les sols sur de relativement grandes étendues, par exemple le sol d'un atelier, le sol d'un bâtiment de stockage. Elle est présentée dans sa position d'utilisation.

La balayeuse industrielle 100 est destinée à être déplacée sur le sol par un engin de levage motorisé, tel qu'un chariot élévateur pour quelle puisse balayer et ramasser, les saletés, les poussières, les détritus, reposant sur le sol.

La balayeuse industrielle 100 se compose d'un châssis 200 supportant les constituants de celle-ci et qui est porté par deux roues principales gauche 210a et droite 210b ainsi que par une roulette 230 montée folle à l'avant du châssis 200, permettant ainsi à la balayeuse industrielle 100 d'évoluer sur le sol en suivant une trajectoire rectiligne ou non, initiée par la conduite de l'engin de levage motorisé.

La présence de cette roulette permet également à la balayeuse industrielle de reposer sur le sol par trois points, lui conférant ainsi une bonne stabilité. De préférence, les deux roues principales 210a et 210b supportent la plus grande partie de la masse de la balayeuse industrielle. Elles ont un axe de rotation commun.

Le châssis 200 est constitué principalement d'un assemblage mécano-soudé.

La balayeuse industrielle 100 est pourvue d'un moyen 300 permettant son déplacement par l'engin de levage motorisé. Sur ces Figs. 1, 2 et 3, ce moyen 300 est adapté pour être tenu par les fourches de l'engin de levage motorisé, afin que, d'une part, cet engin puisse déplacer, en la poussant, la balayeuse industrielle sur le sol pour le nettoyer et, d'autre part, que l'engin puisse la soulever du sol afin de la déplacer rapidement, par exemple, vers un lieu de stockage ou pour vidanger un bac de collecte dont elle est pourvue.

Ce moyen 300 comprend au moins un fourreau 310 monté de manière rotative suivant un axe vertical si l'on considère la balayeuse industrielle reposant sur le sol. Sur ces Figs. 1, 2 et 3, le moyen 300 comprend deux fourreaux 310a et 310b, dont les dimensions sont adaptées pour qu'ils puissent être enfilés sur les deux doigts de la fourche de l'engin de levage motorisé.

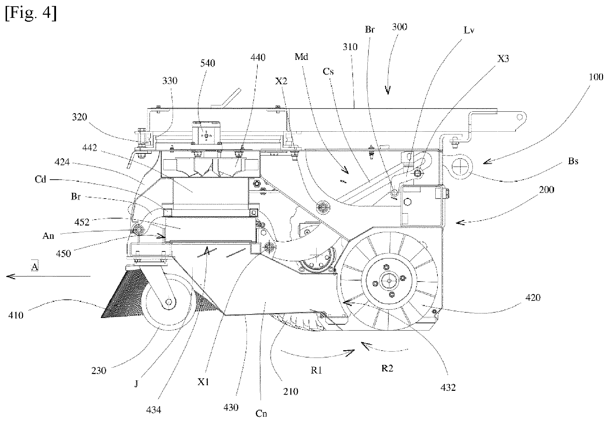

À la Fig. 4, les deux fourreaux 310 sont fixés sur une première couronne 320 qui est montée libre à rotation par l'intermédiaire de billes dans une seconde couronne 330 solidaire de la partie supérieure du châssis 200 de la balayeuse industrielle 100, tel un roulement à billes.

Le relativement grand diamètre de ces couronnes 320, 330 permet à l'engin de soulever la balayeuse industrielle sans déformer son châssis. L'axe vertical commun à ces deux couronnes est situé à l'avant de l'axe des roues principales 210, si l'on considère le sens d'avancement de la balayeuse industrielle matérialisé par la flèche A, si bien qu'elle peut suivre la trajectoire initiée par l'engin, en obligeant sa roue folle 230 à changer de direction.

Pendant le déplacement de la balayeuse industrielle sur le sol, les deux roues principales 210 entraînent des accessoires tournants qui sont nécessaires, notamment, à l'opération de balayage et d'aspiration.

À la Fig. 4, ces accessoires se composent d'au moins une brosse 410 d'axe quasi vertical, placée à l'avant et latéralement à la balayeuse industrielle 100 et qui est chargée de ramener les saletés sous la balayeuse industrielle, d'une brosse 420 à axe horizontal placée dans la partie arrière de la balayeuse industrielle pour balayer le sol et reprendre les saletés ramenées par la brosse 410, afin de les envoyer dans un bac de collecte 430, d'une turbine 440 située en aval du bac de collecte pour favoriser, par aspiration, l'introduction des poussières dans le bac de collecte 430. L'axe de la brosse 420 est perpendiculaire à la direction d'avancement A de la balayeuse industrielle pour renvoyer les saletés et les poussières dans le bac de collecte 430. La brosse 410 présente l'aspect d'un tronc de cône. Dans la pratique, son axe n'est pas exactement vertical puisqu'il est orienté de manière à ce que la brosse 410 touche le sol par sa partie avant, si l'on considère encore le sens d'avancement A de la balayeuse industrielle. Elle tourne suivant le sens indiqué par la flèche T sur la Fig. 1, pour ramener sous la balayeuse industrielle les saletés pendant qu'elle avance. La brosse 410 est utilisée notamment pour balayer les rebords. Elle peut être désactivée. À la Fig. 4, la brosse 420 à axe horizontal présente l'aspect d'un cylindre. Elle tourne en sens inverse de celui des roues, comme l'indiquent les deux flèches R1 (roues) et R2 (brosse) pour ramener les saletés vers le bac de collecte 430 pendant l'avancement de la balayeuse industrielle. Le bac de collecte 430 apparaît sous la balayeuse industrielle. Il est constitué d'un caisson Cn fermé, de section transversale en forme de L, mais qui est cependant pourvu de deux ouvertures 432 et 434. L'une 432 de ces deux ouvertures est une ouverture d'admission des poussières dans ledit caisson, elle débouche au ras de la brosse 420 et en aval de celle-ci (en considérant son sens de rotation). L'autre ouverture 434 est une ouverture de sortie de l'air, elle débouche vers un moyen de filtration 450 constitué ici d'un filtre à air 452 placé sous la turbine 440. L'ouverture de sortie de l'air 434 débouche sous le filtre à air 452. La turbine 440 est disposée dans une chambre d'aspiration sous laquelle est fixée une hotte 442 et dans laquelle ladite chambre d'aspiration débouche.

Le caisson Cn est bordé latéralement de deux joues J qui remontent à l'intérieur de la balayeuse industrielle 100, dans la position de fermeture du caisson Cn. Une extrémité de ces deux joues J est traversée par une articulation An d'axe horizontal, dans la position d'utilisation de la balayeuse industrielle 100 et qui traverse également la partie avant de la balayeuse industrielle, en considérant son sens d'avancement. L'articulation An est tenue entre deux joues constitutives du châssis 200 de la balayeuse industrielle 100. Seule une joue 424 est visible sur cette Fig. 4 en coupe.

Le fonctionnement de cette turbine 440 permet de générer, par aspiration, un flux d'air entrant par l'ouverture d'admission 432 et sortant par l'ouverture de sortie de l'air 434 pour aspirer dans le bac de collecte 430 les poussières en suspension sous la balayeuse industrielle. Le filtre à air 452 retient ces poussières, pendant le fonctionnement de la balayeuse industrielle.

L'air filtré est expulsé par la turbine 440 au travers de passages traversant les joues du châssis 200.

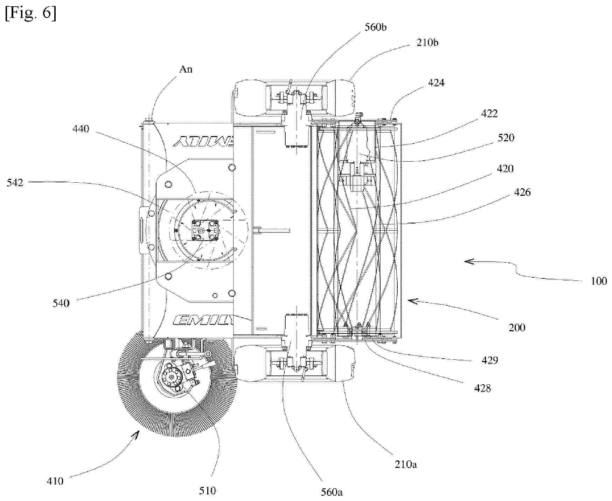

À la Fig. 6, la brosse latérale 410, la brosse à axe horizontal 420 ainsi que la turbine d'aspiration 440 sont entraînées à rotation par respectivement trois moteurs hydrauliques 510, 520 et 540, alimentés par deux pompes hydrauliques 560a et 560b. Ces deux pompes hydrauliques sont respectivement entraînées à rotation par les deux roues principales 210a et 201b de la balayeuse industrielle 100.

À la Fig. 1, le moteur 510 d'entraînement de la brosse 410 est monté dans une patte de fixation 512 qui est montée à coulissement dans un fourreau 514. Un moyen de manoeuvre 516, tel qu'un vérin à manivelle, permet de régler la hauteur du moteur 510 et donc la hauteur de la brosse qui est montée directement sur l'axe dudit moteur. À la Fig. 6, le moteur 540 d'entraînement de la turbine 440 est fixé sur une plaque 542 solidaire du châssis 200 de la balayeuse industrielle 100. Ce moteur 540 est du type à haute vitesse de rotation pour entraîner directement la turbine dans sa vitesse nominale d'efficacité.

Le moteur 520 d'entraînement de la brosse à axe horizontal 420 est logé dans un pot 422 solidaire de la première joue 424 constituant le châssis 200 de la balayeuse industrielle 100. Le pot 422 est logé dans une extrémité d'un fourreau 426, supportant à sa périphérie les éléments de brossage de la brosse 420, de manière à ce que le moteur 520 puisse entraîner ladite brosse. Le fourreau 426 est par ailleurs, tenu par son autre extrémité dans un palier 428 solidaire de la seconde joue 429 constituant le châssis 200.

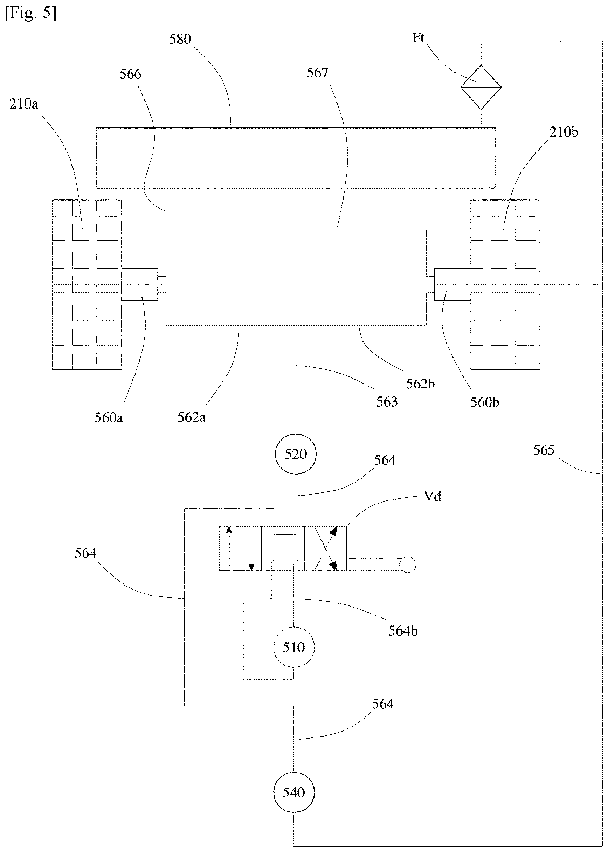

À la Fig. 5, les deux pompes hydrauliques 560a et 560b sont branchées en parallèle pour alimenter, à suivre, les moteurs hydrauliques, 520, 510 et 540, raccordés en série.

Ainsi le couple moteur fourni par les deux roues pendant l'entraînement de la balayeuse industrielle par roulage sur le sol est entièrement utilisé par les deux pompes hydrauliques 560a et 560b alimentant les moteurs hydrauliques 520, 510 et 540.

Lorsque la balayeuse industrielle avance en suivant une trajectoire courbe, les deux roues 210a et 210b tournent à des vitesses différentes. Elles entraînent logiquement les deux pompes hydrauliques 560a et 560b à des vitesses différentes, cependant leurs débits s'additionnent, si bien que la puissance fournie par les deux pompes hydrauliques 560a et 560b est sensiblement identique, pour une vitesse d'avancement particulière de la balayeuse industrielle, qu'elle se déplace suivant une trajectoire rectiligne ou qu'elle se déplace suivant une trajectoire courbe. Les deux pompes hydrauliques 560a et 560b travaillent toujours quelle que soit la trajectoire de la balayeuse industrielle.

Par ailleurs, les trois moteurs 520, 510 et 540 sont branchés en série pour qu'ils soient tous alimentés par le même débit. L'efficacité de la balayeuse industrielle 100 peut être optimisée dans une gamme de vitesse choisie.

Par cet agencement, le déplacement de la balayeuse industrielle sur le sol par l'engin de levage motorisé provoque l'entraînement des deux pompes hydrauliques 560 qui alimentent ainsi en série les différents moteurs. L'ordre de branchement des moteurs est de préférence le suivant. Le premier moteur alimenté est le moteur 520 de la brosse à axe horizontal, le second moteur 510 entraînant la brosse conique et le troisième moteur 540 est celui qui entraîne la turbine.

En référence à la Fig. 5, le raccordement hydraulique est le suivant :
Les orifices de sortie côté pression des deux pompes hydrauliques 560a et 560b sont ainsi raccordés respectivement à deux canalisations 562a et 562b qui se raccordent à une canalisation 563 d'alimentation du premier moteur 520. D'autres canalisations 564 réunissent respectivement l'orifice de sortie côté pression d'un moteur avec l'orifice d'alimentation du moteur suivant. Une autre canalisation de retour 565 raccorde l'orifice de sortie du dernier moteur 540 avec un réservoir 580 de stockage du fluide hydraulique. Un filtre hydraulique Ft est interposé entre cette canalisation 565 et le réservoir 580. Ce réservoir 580 est placé au-dessus des deux pompes hydrauliques 560a et 560b, et il alimente en fluide celles-ci par gravité, par l'intermédiaire de deux canalisations 566 et 567 dont l'une, 567 est, sur cette Fig. 5, raccordée en dérivation de l'autre.

Du fait qu'une simple canalisation suffise pour alimenter en série chacun des moteurs, on peut placer chaque moteur de telle manière qu'il entraîne directement l'accessoire correspondant.

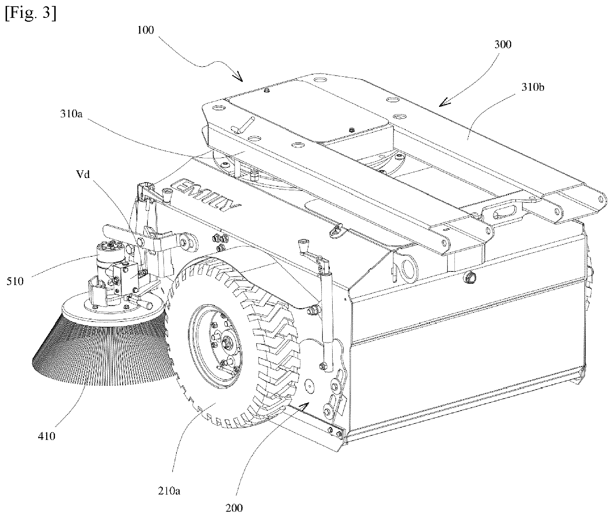

Une vanne de dérivation Vd à commande manuelle est raccordée en dérivation sur la portion de la canalisation 564 reliant le moteur hydraulique 520 avec le moteur hydraulique 510, via une canalisation 564b et de part et d'autre du moteur hydraulique 510, pour permettre par actionnement de la vanne Vd, de désactiver le fonctionnement dudit moteur hydraulique 510 portant la brosse latérale. La vanne de dérivation Vd est sur cette Fig. 5, un distributeur hydraulique du type 4/3 à commande manuelle. La vanne de dérivation Vd est fixée, comme cela apparaît sur la Fig. 3, sur le moteur hydraulique 510. Elle commande le fonctionnement dans un sens de rotation de la brosse 410, l'arrêt du fonctionnement de la brosse 410, le fonctionnement de la brosse 410 dans son autre sens de rotation.

On utilise préférentiellement des pompes hydrauliques de relativement forte cylindrée qui peuvent dans l'invention être utilisées sans multiplicateur de vitesse. Dans une variante de réalisation, non représentée, la balayeuse industrielle est dépourvue de son réservoir de stockage hydraulique, des deux pompes hydrauliques, mais conserve ses moteurs hydrauliques. L'engin de levage motorisé est équipé d'une pompe hydraulique. Les moteurs de la balayeuse industrielle sont raccordés à la pompe hydraulique de l'engin de levage motorisé par l'intermédiaire de raccords hydrauliques.

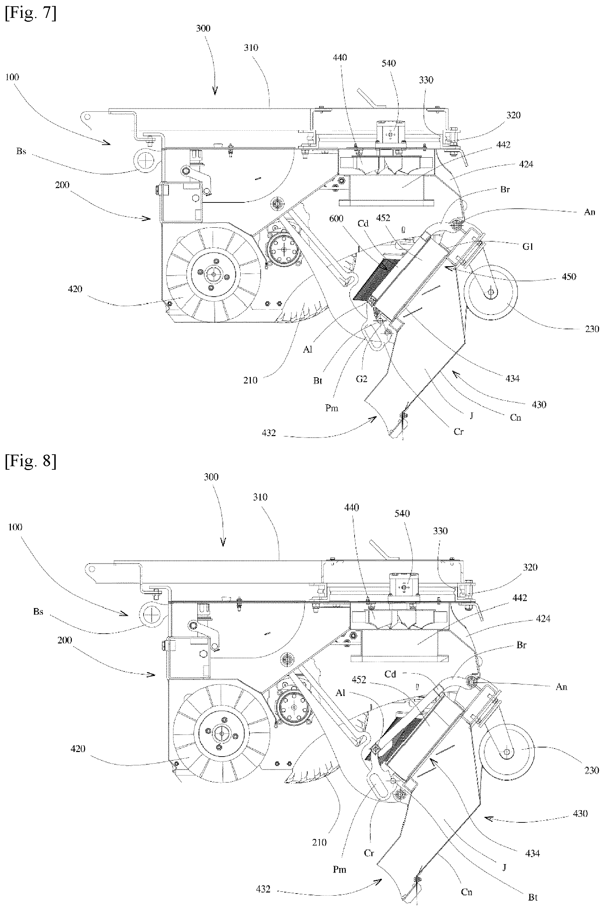

Le bac de collecte 430 est monté de manière articulée et à pivotement autour de son articulation An, entre une position de fermeture et de travail de la balayeuse industrielle, visible sur la Fig. 4 où la partie la plus longue de la géométrie en L de son caisson Cn s'étend dans une direction quasi horizontale sous la balayeuse industrielle 100 pour que son ouverture d'admission 432 puisse coopérer avec la brosse 420 tout en contenant les saletés à l'intérieur dudit bac de collecte et une position maximum d'ouverture visible sur la Fig. 7, où la partie la plus longue de la géométrie en L du caisson Cn s'étend de manière oblique pour permettre la vidange du contenu du bac de collecte 430, par le dessous de la balayeuse industrielle, par exemple dans un conteneur de collecte des déchets. La position latérale de l'articulation An est décalée latéralement du centre de gravité du bac de collecte 430. Celui-ci peut ainsi s'ouvrir sous l'effet de la gravité vers sa position d'ouverture.

La balayeuse industrielle 100 a été préalablement soulevée par l'engin de levage motorisé, puis déplacée au dessus du conteneur de collecte des déchets, pour permettre la vidange du bac de collecte 430. Après soulèvement de la balayeuse industrielle 100, le passage de la position de fermeture à la position maximum d'ouverture s'effectue sous l'effet de la gravité et le bac de collecte 430 pivote ainsi vers le bas pour présenter l'ouverture d'admission 432 vers le bas.

La vidange du bac de collecte 430 est faite dans sa position d'ouverture, au travers de l'ouverture d'admission 432 orientée obliquement vers le bas.

Dans l'invention, le filtre à air 452 est fixé sur le bac de collecte 430. Il se déplace ainsi comme le bac de collecte 430 pendant son pivotement. Le filtre à air 452 est fixé contre l'ouverture de sortie de l'air 434 du bac de collecte 430 par l'intermédiaire d'un applicateur 600 qui le bride sur le bac de collecte 430.

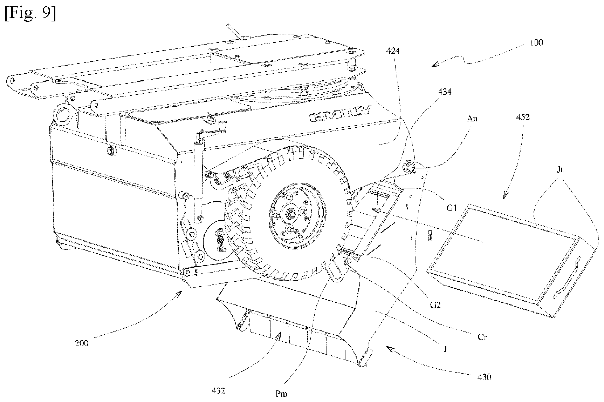

Le filtre à air 452 présente sur la Fig. 9, préférentiellement une géométrie en forme de parallélépipède ou de prisme, délimitée par deux faces principales ouvertes et découvrant l'élément filtrant, l'une inférieure, pour l'admission d'air dans le filtre à air 452 et l'autre supérieure, pour la sortie de l'air filtré.

Deux joints Jt sont fixés sur le périmètre des deux faces principales supérieure et inférieure du filtre à air 452.

Le filtre à air 452 est inséré préalablement et latéralement entre deux glissières G1 et G2 de guidage, disposées à l'opposé l'une de l'autre et fixées sur deux bords transversaux délimitant l'ouverture 434 de sortie de l'air. La flèche 1 montre la direction d'insertion du filtre à air 452 entre les deux glissières G1 et G2. Une butée, non représentée, solidaire du caisson Cn, limite la course de l'insertion du filtre à air 452 dans ledit caisson. Le filtre à air 452 demeure ainsi positionné autour de l'ouverture 434 de sortie de l'air.

Ainsi, et dans la position d'ouverture du bac de collecte 430, visible sur la Fig. 7, les poussières, les saletés, demeurent cantonnées à l'intérieur du bac de collecte 430 et ne peuvent ressortir que par l'ouverture 432. La balayeuse industrielle demeure relativement propre à l'usage.

L'applicateur 600 est conçu, d'une part, pour appliquer le filtre à air 452 sur l'ouverture 434 de sortie de l'air du bac de collecte 430 et, d'autre part, pour le débloquer de son emplacement de fonctionnement pour le retirer afin de le nettoyer, puis le remettre en place ou encore pour le remplacer le cas échéant.

L'applicateur 600 est constitué sur les Figs. 7 et 8, d'un cadre Cd prenant appui sur le joint périmétrique de la face supérieure du filtre à air 452, le cadre Cd étant tenu par deux bras Br montés de manière articulée, avantageusement autour de l'articulation An. Deux crochets Cr sont fixés au cadre Cd, et de l'autre côté des bras Br, pour être accrochés mutuellement sur une barre de retenue Bt réunissant les deux joues J du bac de collecte 430.

Dans la position de fermeture du bac de collecte 430, visible sur la Fig. 4, le cadre Cd prend appui sur le périmètre du débouché de la hotte 442. Le périmètre de ce débouché de la hotte 442 est équipé d'un joint d'étanchéité périmétrique qui coopère avec le cadre Cd pour procurer un assemblage étanche entre la hotte 442 et le caisson Cn.

Sur les Figs. 7 et 8, le cadre Cd est formé de quatre barreaux creux assemblés deux à deux à angle droit. Les deux crochets Cr sont fixés aux deux extrémités d'un axe commun de liaison Al qui est tenu dans un barreau transversal.

L'un des deux crochets Cr est équipé d'une poignée de manoeuvre Pm destinée à basculer les deux crochets Cr autour de leur axe commun de liaison Al entre une position de blocage du filtre à air 452 sur le bac de collecte 430, visible sur la Fig. 7, et une position de dégagement du filtre à air 452, visible sur la Fig. 8, pour les dégager de la barre de retenue Bt, position dans laquelle le filtre à air 452 peut être extrait du bac de collecte 430, à la manière d'un tiroir comme le montre la Fig.9.

À cet effet chaque crochet Cr incorpore une portion en forme d'arc de cercle dimensionnée pour s'accrocher sur le profil cylindrique de la barre de retenue Bt. Chaque crochet Cr incorpore à son extrémité opposée à l'axe commun de liaison Al, un profil en forme de came convexe dimensionné pour coopérer avec la barre de retenue Bt pour écarter ledit crochet afin que sa portion en forme d'arc de cercle puisse s'accrocher automatiquement sur le profil cylindrique de la barre de retenue Bt. Cette caractéristique permet de bloquer automatiquement le filtre à air 452 sur le bac de collecte 430 pendant la remontée de celui-ci, si l'opérateur a oublié de refermer l'applicateur 600 sur ledit filtre à air. La fermeture de l'applicateur 600 est alors mise en oeuvre par appui du cadre Cd sur le débouché périmétrique de la hotte 442.

Dans la position de dégagement de l'applicateur 600, il est ainsi possible d'extraire le filtre à air 452, pour le nettoyer ou le remplacer, comme cela est montré sur la Fig. 9. L'un des deux crochets Cr est ramené vers sa position de blocage par l'intermédiaire d'un moyen de rappel, tel qu'un ressort.

Sur les Figs. 4, 11, 12 et 13, la balayeuse industrielle 100 de l'invention est équipée d'un mécanisme de décolmatage Md de son filtre à air 452. Le mécanisme de décolmatage Md comprend une butée active à la fin du mouvement d'ouverture du bac de collecte 430, un levier Lv de déblocage mettant en oeuvre l'ouverture du bac de collecte 430 sous l'effet de sa masse, vers sa position maximum d'ouverture de celui-ci.

Sur les Figs. 4, 11, 12 et 13, la butée est constituée d'un coulisseau Cs qui forme une butée pour le bac de collecte 430 dans sa position maximum d'ouverture. Il est monté de manière articulée et au niveau d'une extrémité sur le bac de collecte 430, par l'intermédiaire d'un axe X1 commun traversant le coulisseau Cs et en étant tenu entre les deux joues J dudit bac de collecte. L'axe X1 est éloigné de l'articulation An et en étant positionné de l'autre côté du filtre à air 452 de sorte qu'il supporte la majorité de la masse du bac de collecte 430.

Le coulisseau Cs s'étend de manière oblique en montant vers l'arrière de la balayeuse industrielle 100. Le coulisseau Cs est en mesure de coulisser respectivement le long d'un second axe X2 transversal et solidaire du châssis 200 de la balayeuse industrielle 100. Le coulisseau Cs est à cet effet traversé d'une rainure Rn dans laquelle prend place le second axe X2. La rainure Rn présente une géométrie en L avec une partie longue Pl qui s'étend dans la longueur du coulisseau Cs et une partie courte Pc qui prolonge perpendiculairement la partie longue Pl et dans la partie basse de celle-ci. La partie courte Pc s'étend vers le haut et au travers de la largeur dudit coulisseau Cs. L'extrémité de la partie courte Pc de la rainure Rn définit, par son engagement sur le second axe X2, tel un verrou, la position de fermeture du caisson Cn. L'extrémité de la partie longue Pl de la rainure Rn définit, en coopération avec le second axe X2, une butée déterminant la position d'ouverture maximum du caisson Cn et par conséquent la position d'ouverture maximum du bac de collecte 430.

Le bac de collecte 430 est susceptible, après le basculement du levier Lv, de basculer brutalement de sa position de fermeture vers sa position d'ouverture en obligeant le coulisseau Cs à pivoter autour de son axe X1 et en obligeant le coulisseau Cs à coulisser le long du second axe X2.

Sous l'effet de sa masse, le bac de collecte 430 peut ainsi s'ouvrir brutalement. Le pivotement du coulisseau Cs est mis en oeuvre par l'intermédiaire du levier Lv qui est monté de manière articulée sur le châssis 200 et en son milieu autour d'un troisième axe X3.

Le levier Lv porte perpendiculairement au niveau d'une extrémité, une barre Br et le levier Lv est disposé de sorte que la barre Br puisse prendre appui sur un chant du coulisseau Cs, lorsque la barre Br est basculée pour dégager la partie courte Pc du coulisseau Cs de l'emprise du second axe X2.

L'autre extrémité du levier Lv ressort au travers d'une fente traversant une paroi dorsale Ds constitutive du châssis 200. Cette autre extrémité est traversée d'un passage permettant au levier Lv de fonctionner comme un basculeur Bs en étant basculé autour de son troisième axe X3.

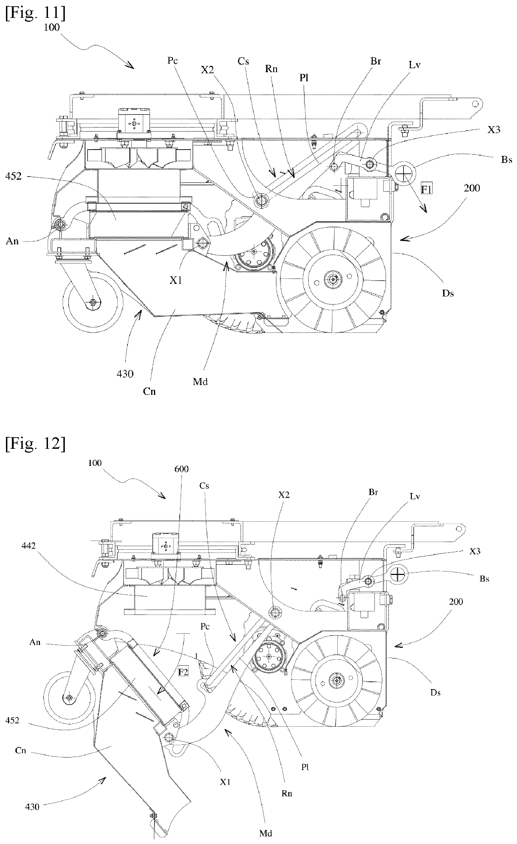

Ainsi, et en référence à la Fig. 12, le déverrouillage du bac de collecte 430 est obtenu en tirant sur le basculeur Bs, comme le suggère la flèche F1, par exemple à l'aide d'une simple perche. La barre Br fait alors pivoter le coulisseau Cs autour du second axe X2, désengageant ainsi la partie courte Pc de la rainure Rn. Le coulisseau Cs ainsi libéré descend jusqu'à ce que l'extrémité de la partie longue Pl de la rainure Rn parvienne brutalement en butée sur le second axe X2.

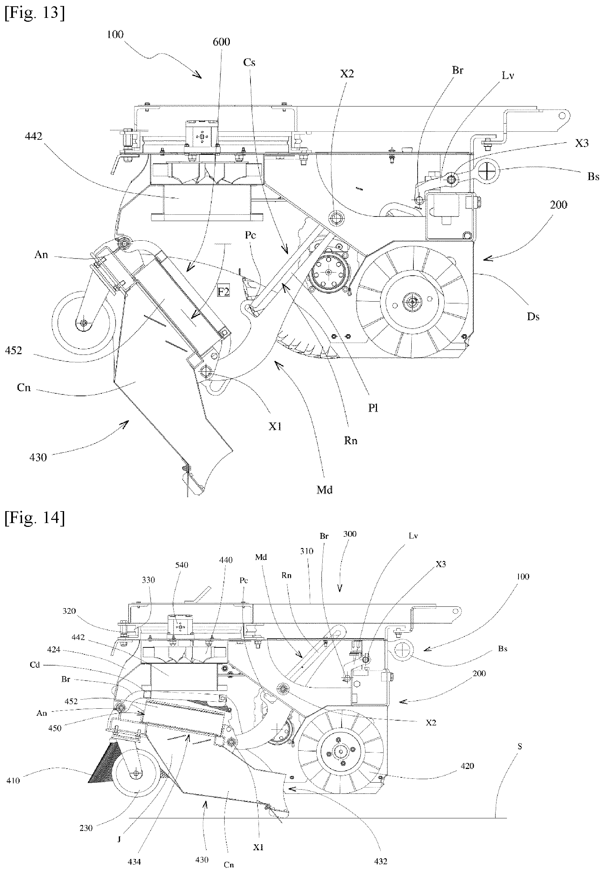

En référence à la Fig. 13, cette action conduit le bac de collecte 430 à s'ouvrir sous l'effet de la gravité et à basculer autour de l'articulation An vers sa position d'ouverture maximum, comme le suggère la flèche F2. Le mouvement d'ouverture du bac de collecte 430 est interrompu brutalement par le choc de l'extrémité de la rainure Rn lorsqu'elle vient frapper le second axe X2. Ce choc provoque le décolmatage du filtre à air 452 qui est maintenu bridé sur le bac de collecte 430, par l'intermédiaire de l'applicateur 600. Les poussières éjectées du filtre à air 452 sont alors collectées dans le bac de collecte 430. Aucune poussière ne se répand donc plus à l'extérieur de la balayeuse industrielle 100 et en particulier au niveau du filtre à air 452. Les abords de la machine demeurent propres. La chambre d'aspiration de la turbine 440 demeure propre, ce qui réduit les opérations de maintenance de la balayeuse industrielle 100.

Pour faire relever le bac de collecte 430 vers sa position de fermeture, il convient en référence à la Fig. 14, d'abaisser la balayeuse industrielle 100 au niveau du sol S en utilisant l'engin de levage. La rainure Rn du coulisseau Cs coulisse alors le long du second axe X2 jusqu'à ce que la partie courte Pc l'emprisonne, tel un verrou, par abaissement dudit coulisseau Cs sous l'effet de sa masse.

Le bac de collecte 430 se referme ainsi automatiquement.

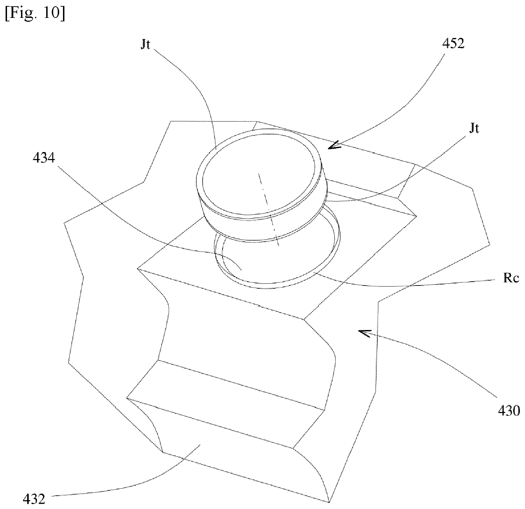

Dans une première variante de réalisation présentée sur la Fig. 10, le filtre à air 452 présente une géométrie cylindrique. Il peut être fixé sur l'ouverture 434 de sortie de l'air constitutive du bac de collecte 430. L'ouverture 434 de sortie de l'air présente un périmètre circulaire. Elle est bordée perpendiculairement vers le haut d'un rebord circulaire Rc dans lequel peut prendre place le filtre à air 452.

Deux joints Jt sont fixés sur le périmètre des deux faces principales supérieure et inférieure du filtre à air 452.

L'applicateur comprend dans cette variante de réalisation, une couronne prenant appui sur le joint périmétrique de la face supérieure du filtre à air, la couronne étant tenue par deux bras montés de manière articulée sur l'articulation d'axe horizontal. Deux crochets sont fixés à la couronne, par exemple par l'intermédiaire d'une barre, et de l'autre côté des bras, pour être accrochés mutuellement sur une barre de retenue réunissant les deux joues du bac de collecte.

Dans une seconde variante de réalisation, non représentée, le mécanisme de décolmatage comprend un câble dont une extrémité est fixée sur le châssis de la balayeuse industrielle et dont l'autre extrémité est fixée sur l'axe commun (référencé X1 sur les Figs. 4, 11, 12 et 13. La balayeuse industrielle 100 est équipée dans cette variante de réalisation d'un verrou de blocage automatique du bac de collecte lorsqu'il est ramené vers sa position de fermeture. Le verrou incorpore un pêne escamotable. Le déblocage du verrou provoque l'ouverture du bac de collecte. Le câble se tend alors et forme une butée pour le bac de collecte. Le choc brutal produit à la fin du mouvement d'ouverture du bac de collecte décolmate le filtre à air.

Dans une troisième variante de réalisation, non représentée, le mécanisme de décolmatage comprend une première butée radiale portée par l'arbre constitutif de l'articulation d'axe horizontal (référencée An sur les Figs. 4, 11, 12 et 13, d'une seconde butée fixe portée par le châssis de la balayeuse industrielle et coopérant avec la butée radiale, pour limiter la rotation du bac de collecte autour de son articulation d'axe horizontal à sa position d'ouverture maximale.

Là encore, le mouvement d'ouverture du bac de collecte est brutalement stoppé à sa position d'ouverture maximale par la rencontre des deux butées et provoque le décolmatage du filtre à air fixé sur la bac de collecte.

Le mécanisme de décolmatage Md de la balayeuse industrielle est d'une construction plus simple et plus fiable que dans la demande FR3087798.

Les poussières éjectées du filtre à air 452 à l'issue de son décolmatage demeurent confinées dans le bac de collecte 430. Les poussières ne se répandent donc plus autour de la balayeuse industrielle 100. Le travail de la balayeuse industrielle devient moins salissant.

## Revendications

1. Balayeuse industrielle (100) conçue pour fonctionner par roulage sur un sol à nettoyer, en la poussant ou en la tractant, comprenant :
une brosse (420) à axe horizontal en considérant la position d'utilisation de la balayeuse industrielle sur un sol horizontal,
un bac de collecte (430) destiné à collecter les saletés balayées par la brosse (420) pendant le fonctionnement de la balayeuse industrielle (100), le bac de collecte (430) étant monté à pivotement autour d'une articulation (An) décalée latéralement du centre de gravité du bac de collecte (430) entre une position de fermeture et de travail de la balayeuse industrielle (100) et une position maximum d'ouverture permettant la vidange dudit bac de collecte,
une turbine d'aspiration (440) située en aval du bac de collecte (430) pour favoriser, par aspiration, l'introduction des poussières dans ledit bac de collecte lorsqu'il est disposé dans sa position de fermeture,
deux roues (210a, 210b) destinées à prendre appui sur le sol à nettoyer, un filtre à air (452) et un mécanisme de décolmatage du filtre à air,
**caractérisée en ce que** le filtre à air (452) est fixé sur le bac de collecte (430), et
le mécanisme de décolmatage (Md) du filtre à air (452) comprend une butée conçue pour bloquer la course du bac de collecte (430) dans sa position maximum d'ouverture, la butée provoquant un choc à la fin du mouvement d'ouverture du bac de collecte (430),
où le passage de la position de fermeture à la position maximum d'ouverture s'effectue sous l'effet de la gravité.

2. Balayeuse industrielle (100) selon la revendication 1, **caractérisée en ce que** le bac de collecte (430) comprend un caisson (Cn), de section transversale en forme de L, pourvu d'une ouverture (432) d'admission des saletés et des poussières, d'une ouverture (434) de sortie de l'air, le filtre à air (452) étant fixé autour de l'ouverture (434) de sortie de l'air et où en position d'ouverture, la vidange du bac de collecte (430) s'effectue à travers l'ouverture d'admission (432).

3. Balayeuse industrielle (100) selon la revendication 2, **caractérisée en ce que** deux glissières (G1 et G2) de guidage du filtre à air (452) sont disposées à l'opposé l'une de l'autre et en étant fixées sur deux bords transversaux délimitant l'ouverture (434) de sortie de l'air, le filtre à air (452) présentant une géométrie en forme de parallélépipède ou de prisme, le filtre à air (452) étant inséré entre les deux glissières (G1, G2).

4. Balayeuse industrielle (100) selon la revendication 2 ou 3, **caractérisée en ce que** le filtre à air (452) est délimité par deux faces principales ouvertes et découvrant l'élément filtrant, l'une inférieure, pour l'admission d'air et l'autre supérieure, pour la sortie de l'air filtré, deux joints (Jt) étant fixés sur le périmètre des deux faces principales dudit filtre à air, le filtre à air (452) étant fixé autour de l'ouverture (434) de sortie de l'air, par l'intermédiaire d'un applicateur (600) comprenant un cadre (Cd) ou une couronne monté(e) de manière articulée et susceptible de prendre appui sur le joint (Jt) périmétrique de la face supérieure du filtre à air (452).

5. Balayeuse industrielle (100) selon la revendication 1, 2, 3 ou 4, **caractérisée en ce que** la butée comprend un coulisseau (Cs) monté de manière articulée par une extrémité sur le bac de collecte (430), par l'intermédiaire d'un axe commun (X1) avec le bac de collecte (430), le coulisseau (Cs) étant traversé d'une rainure (Rn) pouvant coulisser sur un second axe (X2) solidaire d'un châssis (200) constitutif de la balayeuse (100), la rainure (Rn) comprenant une partie longue (Pl) et dont l'extrémité libre définit en coopération avec le second axe (X2), la butée déterminant la position d'ouverture maximum du bac de collecte (430).

6. Balayeuse industrielle (100) selon la revendication 5, **caractérisée en ce que** la partie longue (Pl) de la rainure (Rn) est prolongée dans la partie basse de celle-ci, par une partie courte (Pc) qui s'étend vers le haut, l'extrémité de la partie courte (Pc) de ladite rainure définissant, avec son engagement sur le second axe (X2), tel un verrou, la position de fermeture du caisson (Cn).

7. Balayeuse industrielle (100) selon la revendication 1, 2, 3 ou 4, **caractérisée en ce que** le mécanisme de décolmatage (Md) comprend un câble dont une extrémité est fixée sur un châssis (200) constitutif de la balayeuse industrielle (100) et dont l'autre extrémité est fixée sur un axe (X1) commun avec le bac de collecte (430), le câble tendu formant une butée au mouvement d'ouverture du bac de collecte et en déterminant ainsi sa position d'ouverture maximum, et **en ce que** la balayeuse industrielle (100) est équipée d'un verrou de blocage automatique du bac de collecte lorsqu'il est ramené vers sa position de fermeture, le verrou incluant un pêne escamotable.

8. Balayeuse industrielle (100) selon la revendication 1, 2, 3 ou 4, **caractérisée en ce que** le mécanisme de décolmatage (Md) comprend une butée radiale portée par un arbre constitutif de l'articulation (An), une seconde butée fixe portée par un châssis (200) constitutif de la balayeuse industrielle (100) et coopérant avec la butée radiale, pour limiter la rotation du bac de collecte (430) autour de l'articulation (An) à sa position d'ouverture maximale.

9. Balayeuse industrielle (100) selon l'une quelconque des revendications précédentes, **caractérisée en ce qu'**elle comprend deux pompes hydrauliques (560a, 560b) respectivement entraînées à rotation par les deux roues principales (210a et 201b) de la balayeuse industrielle (100), trois moteurs hydrauliques (520, 510 et 540) raccordés en série et alimentés par les deux pompes hydrauliques (560a et 560b) pour respectivement entraîner à rotation, la brosse à axe horizontal (420), une brosse latérale (410) et la turbine d'aspiration (440).

## Patentansprüche

1. Industrielle Kehrmaschine (100), die so gestaltet ist, dass sie auf einem zu reinigenden Boden funktioniert, indem sie geschoben oder gezogen wird, umfassend:
eine Bürste (420) mit horizontaler Achse unter Berücksichtigung der Verwendungsposition der industriellen Kehrmaschine auf einem horizontalen Boden, einen Sammelbehälter (430), der dazu bestimmt ist, den während des Betriebs der industriellen Kehrmaschine (100) durch die Bürste (420) gekehrten Schmutz zu sammeln, wobei der Sammelbehälter (430) um ein Gelenk (An), das zum Schwerpunkt des Sammelbehälters (430) seitlich versetzt ist, zwischen einer Schließ- und Arbeitsposition der industriellen Kehrmaschine (100) und einer Maximalöffnungsposition, die die Entleerung des Sammelbehälters ermöglicht, schwenkbar montiert ist,
eine Saugturbine (440), die sich stromabwärts des Sammelbehälters (430) befindet, um durch Ansaugen das Einbringen von Staub in den Sammelbehälter zu fördern, wenn dieser in seiner Schließposition angeordnet ist,
zwei Räder (210a, 210b), die dazu bestimmt sind, auf dem zu reinigenden Boden aufzuliegen,
einen Luftfilter (452) und einen Mechanismus zur Reinigung des Luftfilters,
**dadurch gekennzeichnet, dass** der Luftfilter (452) am Sammelbehälter (430) befestigt ist und der Mechanismus (Md) zur Reinigung des Luftfilters (452) einen Anschlag umfasst, der dazu ausgelegt ist, den Hub des Sammelbehälters (430) in seiner Maximalöffnungsposition zu blockieren, wobei der Anschlag am Ende der Öffnungsbewegung des Sammelbehälters (430) einen Stoß verursacht,
wobei der Übergang aus der Schließposition in die Maximalöffnungsposition unter der Wirkung der Schwerkraft erfolgt.

2. Industrielle Kehrmaschine (100) nach Anspruch 1, **dadurch gekennzeichnet, dass** der Sammelbehälter (430) einen Kasten (Cn) mit L-förmigem Querschnitt umfasst, der mit einer Öffnung (432) zum Einlassen von Schmutz und Staub und einer Öffnung (434) zum Auslassen von Luft versehen ist, wobei der Luftfilter (452) um die Luftauslassöffnung (434) herum befestigt ist und wobei in der Öffnungsposition die Entleerung des Sammelbehälters (430) über die Einlassöffnung (432) erfolgt.

3. Industrielle Kehrmaschine (100) nach Anspruch 2, **dadurch gekennzeichnet, dass** zwei Gleitschienen (G1 und G2) zur Führung des Luftfilters (452) einander gegenüberliegend angeordnet und an zwei Querkanten, die die Luftaustrittsöffnung (434) begrenzen, befestigt sind, wobei der Luftfilter (452) die Form eines Parallelepipeds oder eines Prismas aufweist, wobei der Luftfilter (452) zwischen den beiden Gleitschienen (G1, G2) eingefügt ist.

4. Industrielle Kehrmaschine (100) nach Anspruch 2 oder 3, **dadurch gekennzeichnet, dass** der Luftfilter (452) durch zwei Hauptflächen begrenzt ist, die offen sind und das Filterelement freilegen, und zwar eine untere für den Lufteinlass und eine obere für den Auslass der gefilterten Luft, wobei am Umfang der beiden Hauptflächen des Luftfilters zwei Dichtungen (Jt) befestigt sind, wobei der Luftfilter (452) um die Luftauslassöffnung (434) herum über einen Applikator (600) befestigt ist, der einen Rahmen (Cd) oder einen Kranz umfasst, der gelenkig montiert ist und an der Umfangsdichtung (Jt) der oberen Fläche des Luftfilters (452) anliegen kann.

5. Industrielle Kehrmaschine (100) nach Anspruch 1, 2, 3 oder 4, **dadurch gekennzeichnet, dass** der Anschlag einen Schieber (Cs) umfasst, der an einem Ende über eine gemeinsame Achse (X1) mit dem Sammelbehälter (430) gelenkig am Sammelbehälter (430) montiert ist, wobei durch den Schieber (Cs) eine Nut (Rn) verläuft, die auf einer zweiten Achse (X2) gleiten kann, die fest mit einem Rahmen (200) verbunden ist, der die Kehrmaschine (100) bildet, wobei die Nut (Rn) einen langen Abschnitt (Pl) umfasst, dessen freies Ende in Zusammenwirkung mit der zweiten Achse (X2) den Anschlag definiert, der die Maximalöffnungsposition des Sammelbehälters (430) bestimmt.

6. Industrielle Kehrmaschine (100) nach Anspruch 5, **dadurch gekennzeichnet, dass** der lange Abschnitt (Pl) der Nut (Rn) im unteren Teil derselben durch einen kurzen Abschnitt (Pc) verlängert ist, der sich nach oben erstreckt, wobei das Ende des kurzen Abschnitts (Pc) der Nut mit seinem Eingriff an der zweiten Achse (X2) wie ein Riegel die Schließposition des Kastens (Cn) definiert.

7. Industrielle Kehrmaschine (100) nach Anspruch 1, 2, 3 oder 4, **dadurch gekennzeichnet, dass** der Reinigungsmechanismus (Md) ein Kabel umfasst, dessen eines Ende an einem Rahmen (200) befestigt ist, der die industrielle Kehrmaschine (100) bildet, und dessen anderes Ende an einer Achse (X1) befestigt ist, die mit dem Sammelbehälter (430) gemeinsam ist, wobei das gespannte Kabel einen Anschlag für die Öffnungsbewegung des Sammelbehälters bildet und so seine Maximalöffnungsposition bestimmt, und dass die industrielle Kehrmaschine (100) mit einem Riegel ausgestattet ist, der den Sammelbehälter automatisch blockiert, wenn er in seine Schließposition zurückgeführt ist, wobei der Riegel einen einziehbaren Bolzen enthält.

8. Industrielle Kehrmaschine (100) nach Anspruch 1, 2, 3 oder 4, **dadurch gekennzeichnet, dass** der Reinigungsmechanismus (Md) Folgendes umfasst: einen radialen Anschlag, der von einer Welle getragen wird, die das Gelenk (An) bildet, und einen zweiten festen Anschlag, der von einem Rahmen (200) getragen wird, der die industrielle Kehrmaschine (100) bildet, und mit dem radialen Anschlag zusammenwirkt, um die Drehung des Sammelbehälters (430) um das Gelenk (An) in seiner Maximalöffnungsposition zu begrenzen.

9. Industrielle Kehrmaschine (100) nach einem der vorangehenden Ansprüche, **dadurch gekennzeichnet, dass** sie Folgendes umfasst: zwei Hydraulikpumpen (560a, 560b), die jeweils von zwei Haupträdern (210a und 201b) der industriellen Kehrmaschine (100) drehend angetrieben werden, und drei Hydraulikmotoren (520, 510 und 540), die in Reihe geschaltet sind und von den beiden Hydraulikpumpen (560a und 560b) gespeist werden, um jeweils die Bürste (420) mit horizontaler Achse, eine seitliche Bürste (410) und die Saugturbine (440) drehend anzutreiben.

## Claims

1. Industrial sweeper (100) designed to operate by rolling along a floor that is to be cleaned, pushed or pulled, comprising:
a brush (420) with an axis that is horizontal when considering the position of use of the industrial sweeper on a horizontal floor,
a collecting pan (430) intended to collect the dirt swept by the brush (420) during operation of the industrial sweeper (100), the collecting pan (430) being mounted with the ability to pivot about an articulation (An) that is offset laterally from the centre of gravity of the collecting pan (430) between a closed and working position of the industrial sweeper (100) and a wide open position allowing said collecting pan to be emptied,
a suction turbine (440) situated downstream of the collecting pan (430) to encourage, by suction, the dust to enter said collecting pan when it is in its closed position,
two wheels (210a, 210b) intended to rest on the floor that is to be cleaned,
an air filter (452) and an unclogging mechanism for the air filter,
**characterized in that** the air filter (452) is fixed to the collecting pan (430), and the unclogging mechanism (Md) for the air filter (452) comprises an end stop designed to block the travel of the collecting pan (430) in its wide open position, the end stop causing a shock at the end of the opening movement of the collecting pan (430),
wherein the passage from the closed position to the wide open position occurs under the effect of gravity.

2. Industrial sweeper (100) according to Claim 1, **characterized in that** the collecting pan (430) comprises a box (Cn) of L-shaped cross section, provided with a dust and dirt intake opening (432), with an air outlet opening (434), the air filter (452) being fixed around the air outlet opening (434) and wherein, in the open position, the collecting pan (430) is emptied through the intake opening (432).

3. Industrial sweeper (100) according to Claim 2, **characterized in that** two guideways (G1 and G2) for guiding the air filter (452) are positioned opposite one another while being fixed to two transverse edges delimiting the air outlet opening (434), the air filter (452) having a geometry in the shape of a parallelepiped or prism, the air filter (452) being inserted between the two guideways (G1, G2).

4. Industrial sweeper (100) according to Claim 2 or 3, **characterized in that** the air filter (452) is delimited by two open main faces uncovering the filter element, one of them being a lower face, for admitting air, and the other one being an upper face for letting filtered air out, two seals (Jt) being fixed to the perimeter of the two main faces of said air filter, the air filter (452) being fixed around the air outlet opening (434), via an applicator (600) comprising a frame (Cd) or a ring mounted in an articulated manner and able to bear against the perimeter seal (Jt) of the upper face of the air filter (452).

5. Industrial sweeper (100) according to Claim 1, 2, 3 or 4, **characterized in that** the end stop comprises a slider (Cs) mounted in an articulated manner via one end to the collecting pan (430) by means of an axis (X1) common with the collecting pan (430), the slider (Cs) having passing through it a slot (Rn) able to slide along a second axis (X2) secured to a chassis (200) that forms part of the sweeper (100), the slot (Rn) comprising a long part (Pl) and the free end of which defines, in collaboration with the second axis (X2), the end stop that determines the wide open position of the collecting pan (430).

6. Industrial sweeper (100) according to Claim 5, **characterized in that** the long part (Pl) of the slot (Rn) is extended in the bottom part of this slot by a short part (Pc) which extends upwards, the end of the short part (Pc) of said slot defining, with its engagement on the second axis (X2) such as a lock, the closed position of the box (Cn).

7. Industrial sweeper (100) according to Claim 1, 2, 3 or 4, **characterized in that** the unclogging mechanism (Md) comprises a cable one end of which is fixed to a chassis (200) which forms part of the industrial sweeper (100) and the other end of which is fixed to an axis (X1) common with the collecting pan (430), the taut cable forming an end stop for the opening movement of the collecting pan and thus determining the wide open position thereof, and **in that** the industrial sweeper (100) is equipped with a lock for automatically blocking the collecting pan when it is returned to its closed position, the lock including a retractable lock bolt.

8. Industrial sweeper (100) according to Claim 1, 2, 3 or 4, **characterized in that** the unclogging mechanism (Md) comprises a radial end stop borne by a shaft constituting the articulation (An), a fixed second end stop borne by a chassis (200) that forms part of the industrial sweeper (100) and that collaborates with the radial end stop in order to limit the rotation of the collecting pan (430) about the articulation (An) to its wide open position.

9. Industrial sweeper (100) according to one f the preceding Claims, **characterized in that** it comprises two hydraulic pumps (560a, 560b) respectively rotationally driven by the two main wheels (210a and 210b) of the industrial sweeper (100), three hydraulic motors (520, 510 and 540) coupled in series and supplied by the two hydraulic pumps (560a and 560b) to respectively drive the rotation of the horizontal-axis brush (420), a lateral brush (410) and the suction turbine (440).
